# EUROPEAN PATENT APPLICATION

(11) **EP 1 819 101 A1**
(43) Date of publication of application: **15.08.2007**
(21) Application number: 07102033.3
(22) Date of filing: 09.02.2007
(51) Int. Cl.: H04L 12/28, H04L 29/06

(54) **Method and apparatus for providing broadcasting content in UPNP network**

(30) Priority: 13.02.2006 KR 20060013703
(71) Applicant: SAMSUNG ELECTRONICS CO., LTD., Suwon-si, Gyeonggi-do 442-742 (KR)
(72) Inventor: Kim, Bong-yen, Gyeonggi-do (KR); Kim, Jae-kwon 553-705 Sinnamusil 5-danji Apt., Gyeonggi-do (KR); Kang, Eun-jung 11-1203 Ggotmebeodeul Maeul, Gyeonggi-do (KR); Kim, Yong-jun 902-702 Manhyeon Maeul 9-danji, Gyeonggi-do (KR); Kang, Dong-wook 2410-1707, Giheung-gu, Yongin-si, Gyeonggi-do (KR)
(74) Representative: Robinson, Ian Michael

(57) **Abstract**

Provided is a method of a media server (710) providing broadcast content received from an outside source in a universal plug and play (UPnP) network. The method includes receiving a message from a control point (730) requesting to change to a second channel, while transmitting broadcast content of a first channel by setting a connection for streaming with a media renderer (720); and transmitting the broadcast content of the second channel instead of the broadcast content of the predetermined first channel by changing a broadcasting reception of the first channel while maintaining the connection.

## Description

Methods and apparatuses consistent with the present invention relate to providing content in a home network, and more particularly, to a media server to provide broadcasting content received from outside of a Universal Plug and Play (UPnP) based home network.

UPnP is a technology for establishing communication among a plurality of devices connected via a network without a complicated setting-up process, whereby the network automatically allows a device to detect a service provided by another device. If a user simply connects a device to a UPnP network, devices that have previously been connected to the UPnP network automatically detect the connected device. Thus, the user can easily use a desired service provided by one of the devices that has been previously connected to the UPnP network.

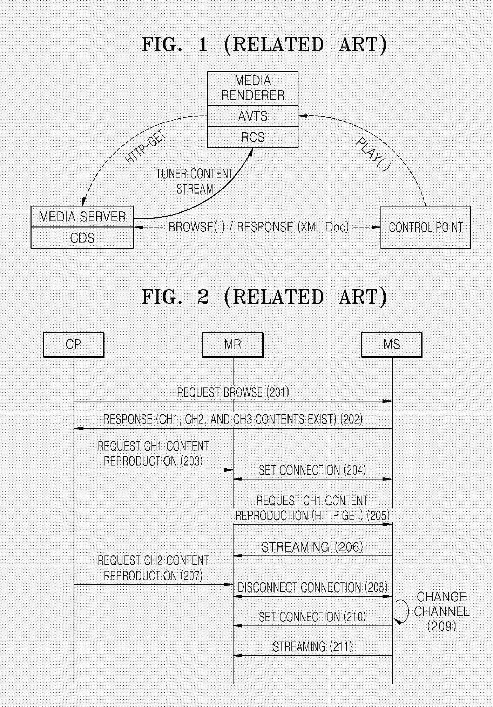

Figure 1 is a diagram illustrating a related art method of using content in a UPnP network.

Referring to Figure 1, a control point, that is, a device providing a user interface, inquires of a media server, which is a source device providing content, about content information. The media server provides a Content Directory Service (CDS) that defines actions allowing the control point to search for and manage content stored in the media server. Browse () is one representative example of the actions. The control point calls Browse() so as to obtain information about content that the media server can provide, in the form of extensible Markup Language (XML).

Upon receiving the information about the content, the control point calls Play(), which is an action defined in an AVTransport Service (AVTS) of the media renderer, in order to request reproduction of one of the content among the contents that the media server can provide. In this case, the Uniform Resource Identifiers (URIs) of the requested content are transmitted to the media renderer, and thus, the media renderer requests the media server to transmit the requested content by sending an HTTP-GET request to the media server, based on the URIs. The media server receiving the HTTP-GET request transmits a stream of the requested content to the media renderer so that the media renderer can reproduce the requested content. The media renderer provides a Rendering Control Service (RCS) that defines actions for controlling the state of the media renderer, such as the volume, contrast, and brightness thereof.

According to the related art method, when the media server streams broadcast content received from outside the UPnP network, a response message for Browse() which is called by the control point is formed of content items by each broadcasting channel. While the media server streams broadcasting of certain received channel to the media renderer, and the control point requests content of another channel, the media server and the media renderer disconnect the existing HTTP connection and set a new connection in order to stream content of the requested channel.

Figure 2 is a flowchart of a related art method of providing broadcast content in a UPnP network.

When a control point (CP) transmits Browse () call to a media server in operation 201, the media server (MS) transmits in response, a broadcast content list of each channel that can be provided to the control point, using a tuner in operation 202. In Figure 2, the media server can provide content received from three channels, i.e. channel 1, channel 2, and channel 3.

After receiving information about the broadcast channels, the control point requests broadcast content of channel 1 to a media renderer (MR) in operation 203. Then the media renderer sets a data streaming based connection to the media server in operation 204, and requests the broadcast content of channel 1 using a <HTTP GET> command to the media server in operation 205. The media server, upon receiving the request of the media renderer, transmits the broadcast content of channel 1 to the media renderer in a stream in operation 206. Accordingly, a user can view a channel 1 broadcast through the media renderer.

When the user requests the broadcast content of channel 2 through the control point while viewing the channel 1 broadcast in operation 207, the media renderer disconnects the existing connection set for streaming of the broadcast content of channel 1 in operation 208 and sets a new connection for receiving the broadcast content of channel 2 in a broadcast stream in operation 210. When the connection is completed, the media renderer uses the <HTTP GET> command again in order to request the broadcast content of channel 2 to the media server. Accordingly, the media server regulates the tuner in order to change the channel to channel 2 and transmits the broadcast content of channel 2 in a stream to the media renderer based on the new connection in operation 211. In other words, in the related art UPnP home network, for the media server to change the channel while transmitting broadcast content, the existing connection should be disconnected and a new connection for transmitting broadcast content of a new channel should be set. Accordingly, a view is lost while the channel is being changed.

According to the present invention there is provided an apparatus and method as set forth in the appended claims. Preferred features of the invention will be apparent from the dependent claims, and the description which follows.

The present invention provides a method and apparatus for changing a channel without losing a view while streaming broadcast content provided by a media server in a UPnP home network.

According to an aspect of the present invention there is provided a method of a media server providing broadcast content received from an outside source in a universal plug and play (UPnP) network, the method including: receiving a message from a control point requesting to change a channel, while transmitting broadcast content of a predetermined channel by setting a connection for streaming with a media renderer; and transmitting the broadcast content of the requested channel instead of the broadcast content of the predetermined channel by changing a broadcast reception channel while maintaining the set connection.

According to another aspect of the present invention, there is provided a computer readable recording medium having recorded thereon a program for executing the method described above.

According to another aspect of the present invention, there is provided a media server apparatus for providing broadcast content received from an outside source in a UPnP network, the media server apparatus including: a connection setter which sets a connection for streaming with a media renderer; a request recognizer which recognizes a message, wherein the message requests to change a channel, received from a control point while transmitting broadcast content of a predetermined channel through the connection; and a channel changer which changes a broadcasting reception channel while maintaining the connection so that the broadcast content of the requested channel is transmitted instead of the broadcast content of the predetermined channel.

According to another aspect of the present invention, there is provided an apparatus for controlling a media server which transmits broadcasting content received from an outside source by setting a connection for streaming with a media renderer in a UPnP network, the apparatus including: an input unit which receives an input corresponding to one of a channel increase and a channel decrease; and a channel change request unit which requests the media server to change a broadcasting reception channel while maintaining the connection already set between the media renderer, based on the received input.

According to another aspect of the present invention, there is provided a method of controlling a media server which transmits broadcast content received from an outside source by setting a connection for streaming with a media renderer in a UPnP network, the method including: receiving an input corresponding to one of a channel increase and a channel decrease; and requesting the media server to change a broadcasting reception channel while maintaining the set connection between the media renderer and the media server, based on the received input.

According to another aspect of the present invention, there is provided a computer readable recording medium having recorded thereon a program for executing the method described above.

The above and other aspects of the present invention will become more apparent by describing in detail exemplary embodiments thereof with reference to the attached drawings in which:
Figure 1 is a diagram illustrating a related art method of using content in a UPnP network;
Figure 2 is a flowchart of a related art method of providing broadcast content in a UPnP network;
Figure 3 is a diagram illustrating a method of providing broadcast content according to an exemplary embodiment of the present invention;
Figure 4 is a flowchart showing processes of a media server providing broadcast content according to an exemplary embodiment of the present invention;
Figure 5 is a signaling diagram of a method of providing broadcast content according to an exemplary embodiment of the present invention;
Figure 6 is a flowchart showing processes of a control point requesting a media server to change a channel according to an exemplary embodiment of the present invention; and
Figure 7 is a diagram illustrating a media server and a control point according to an exemplary embodiment of the present invention.

Hereinafter, the present invention will be described more fully with reference to the accompanying drawings, in which exemplary embodiments of the invention are shown.

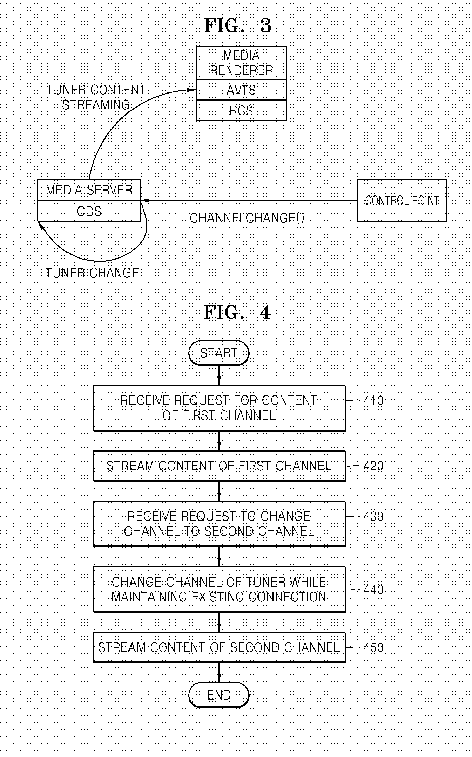

Figure 3 is a diagram illustrating a method of providing broadcast content according to an exemplary embodiment of the present invention. In the current embodiment, a function named ChannelChange() is defined in a CDS provided by a media server. When a control point calls ChannelChange() of the CDS while the media server transmits broadcast content received through a certain broadcasting channel, the media server changes the broadcasting reception channel to a requested channel by referring to the ObjectID included in the call message. During this time, unlike in the related art method, the existing connection set for streaming is not disconnected but is maintained. That is, when ChannelChange(), which is newly defined in the current embodiment, is called, the media server maintains the connection set in order to transmit data in a stream and only changes the broadcasting reception channel. Accordingly, a view, provided by a media renderer to a user, is not lost while a channel is being changed.

Figure 4 is a flowchart showing processes of a media server providing broadcast content according to an exemplary embodiment of the present invention.

When the media server receives a request for broadcast content of a first channel from a media renderer in operation 410, the media server streams the broadcast content of the first channel in response, in operation 420. During operation 420, a control point requests to change a broadcasting reception channel to a second channel in operation 430. Then, the media server controls a tuner in order to change the broadcasting reception channel to the second channel in operation 440 while maintaining the existing connection for streaming the broadcast content of the first channel. Accordingly, the media server can immediately transmit the broadcast content of the second channel in a stream to the media renderer in operation 450 without wasting time disconnecting and setting a connection.

The control point requesting to change the broadcasting reception channel to the second channel of operation 430 refers to the control point calling Channel Change () of the CDS. In order to call Channel Change (), a message, sent from the control point to the media server, should include information for specifying a required channel for broadcast reception. Since the control point already recognizes the ObjectID given to the broadcast content of each channel through calling Browse(), the ObjectID may be used as information for specifying the required channel.

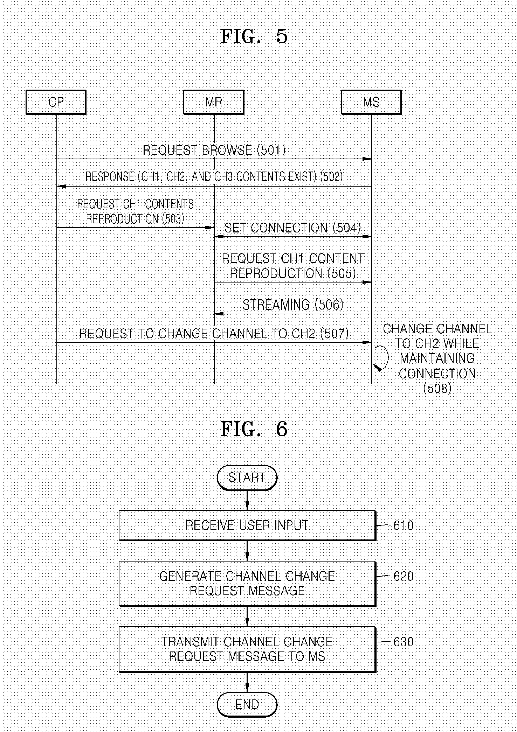

Figure 5 is a signaling diagram of a method of providing broadcast content according to an exemplary embodiment of the present invention.

When a control point transmits a Browse() action to a media server in operation 501, the media server transmits, in response, information about broadcasting channels which can be provided using a tuner in operation 502. Upon receiving the information about the broadcasting channels, the control point requests broadcast content of channel 1 to a media renderer in operation 503. Then, the media renderer sets a connection for streaming of data with the media server in operation 504, and requests broadcast content of channel 1 from the media server using a <HTTP GET> command in operation 505.

Upon receiving the request from the media renderer, the media server transmits the broadcast content received from channel 1 in streams to the media renderer in operation 506. Accordingly, a user can view channel 1 broadcasting through the media renderer.

When the user requests to change a channel by calling ChannelChange() of the media server by means of the control point while viewing the channel 1 broadcasting in operation 507, the media server controls a tuner in order to change the broadcasting reception channel in operation 508 while maintaining the existing connection set for streaming the broadcast content of channel 1. Accordingly afterwards, broadcast content of the requested channel is transmitted to the media renderer (not illustrated).

Figure 6 is a flowchart showing processes of a control point requesting a media server to change a channel according to an exemplary embodiment of the present invention.

When a user presses a button corresponding to a channel increase or a channel decrease in an apparatus, such as a remote control, or the like, including a UPnP control point, and the control point receives, in operation 610, an input signal corresponding to the button, the control point generates a channel change request message corresponding to the input signal in operation 620. The channel change request message is a message for calling a ChannelChange() action defined in the CDS of the media server as described above. The channel change request message includes an ObjectID for specifying a channel that has been requested to be changed and information for specifying a media renderer.

When the generation of the channel change request message is completed, the control point transmits the generated channel change request message to the media server in operation 630 in order to request the change of channel while maintaining the existing connection.

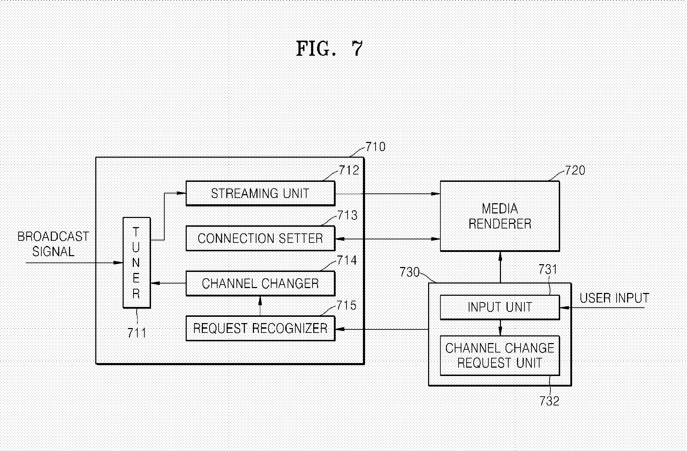

Figure 7 is a diagram illustrating a media server 710 and a control point 730 according to an exemplary embodiment of the present invention.

Referring to Figure 7, the media server 710 includes a tuner 711, a streaming unit 712, a connection setter 713, a channel changer 714, and a request recognizer 715. The tuner 711 receives broadcast content transmitted from an outside source, the streaming unit 712 transmits the received broadcast content to a media renderer 720 by streaming. The connection setter 713 sets a wireless connection with the media renderer 720 in order to transmit the broadcast content in streams.

The request recognizer 715 recognizes a ChannelChange() call message transmitted from the control point 730 and transmits information about a channel that is requested to be changed and about the media renderer 720 to the channel changer 714. Based on the information received, the channel changer 714 regulates the tuner 711 in order to change the channel of broadcast content being transmitted to the media renderer 720.

The control point 730 includes an input unit 731 and a channel change request unit 732. The input unit 731 provides an input means in which a user can request an increase or decrease of a broadcasting channel. When an input signal from the user is transmitted through the input unit 731 to the channel change request unit 732, the channel change request unit 732 generates a message for calling ChannelChange() of the media server 710 and transmits the message to the media server 710 in order to request a change a channel only while maintaining the existing connection.

The exemplary embodiments of the present invention can be written as computer programs and can be implemented in general-use digital computers that execute the programs using a computer readable recording medium. Examples of the computer readable recording medium include magnetic storage medium (e.g., CD-ROMs, or DVDs), and storage media.

According to the exemplary embodiments of the present invention, a user can view broadcast content without losing the broadcast content while changing a channel in a UPnP based home network, even when the channel is changed while a media renderer receives and renders broadcast content from outside the UPnP network provided by a media server.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of a media server (710) providing broadcast content received from an outside source in a Universal Plug and Play (UPnP) network, the method comprising:
receiving from a control point (730) a message requesting to change to a second channel, while transmitting broadcast content of a first channel by setting a connection for streaming with a media renderer (720); and
transmitting broadcast content of the second channel instead of the broadcast content of the first channel by changing a broadcast reception of the first channel while maintaining the set connection.

2. The method of claim 1, wherein the message requesting to change to the second channel comprises an ObjectID of the broadcast content of the second channel.

3. A computer readable recording medium having recorded thereon a program for executing a method of a media server (710) providing broadcast content received from an outside source in a Universal Plug and Play (UPnP) network, the method comprising:
receiving from a control point (730) a message requesting to change to a second channel, while transmitting broadcast content of a first channel by setting a connection for streaming with a media renderer (720); and
transmitting broadcast content of the second channel instead of the broadcast content of the first channel by changing a broadcast reception of the first channel while maintaining the set connection.

4. A media server (710) apparatus for providing broadcast content received from an outside source in a Universal Plug and Play (UPnP) network, the media server (710) apparatus comprising:
a connection setter (713) which sets a connection for streaming with a media renderer (720);
a request recognizer (715) which recognizes a message, which requests to change to a second channel, received from a control point (730) while transmitting broadcast content of a first channel through the connection; and
a channel changer (714) which changes a broadcasting reception of the first channel while maintaining the connection so that broadcast content of the second channel is transmitted instead of the broadcast content of the first channel.

5. The media server (710) apparatus of claim 4, wherein the message, which requests to change to the second channel, comprises an Object ID, and
wherein the request recognizer (715) recognizes the second channel by referring to the ObjectID.

6. An apparatus (730) for controlling a media server (710) which transmits broadcasting content received from an outside source by setting a connection for streaming with a media renderer (720) in a Universal Plug and Play (UPnP) network, the apparatus (730) comprising:
an input unit (731) which receives an input corresponding to one of a channel increase or a channel decrease; and
a channel change request unit (732) which requests the media server (710) to change a broadcasting reception of a first channel while maintaining the current connection set between the media renderer (720), based on the received input.

7. The apparatus (730) of claim 6, wherein the channel change request unit (732) transmits a message, comprising an ObjectID of broadcast content of a second channel, to the media server (710).

8. A method of controlling a media server (710) which transmits broadcast content received from an outside source by setting a connection for streaming with a media renderer (720) in a Universal Plug and Play (UPnP) network, the method comprising:
receiving an input corresponding to one of a channel increase and a channel decrease; and
requesting the media server (710) to change a broadcasting reception of a first channel while maintaining the set connection between the media renderer (720) and the media server (710), based on the received input.

9. The method of claim 8, wherein upon receiving the input a message, comprising an ObjectID of broadcast content of a second channel, is transmitted to the media server (710).

10. A computer readable recording medium having recorded thereon a program for executing a method of controlling a media server (710) which transmits broadcast content received from an outside source by setting a connection for streaming with a media renderer (720) in a Universal Plug and Play (UPnP) network, the method comprising:
receiving an input corresponding to one of a channel increase and a channel decrease; and
requesting the media server (710) to change a broadcasting reception of a first channel while maintaining the set connection between the media renderer (720) and the media server (710), based on the received input.
